# EUROPÄISCHE PATENTANMELDUNG

(11) **EP 3 657 621 A1**
(43) Veröffentlichungstag der Anmeldung: **27.05.2020**
(21) Anmeldenummer: 19210831.4
(22) Anmeldetag: 22.11.2019
(51) Int. Cl.: H02J 3/14, H02J 3/00

(54) **VERFAHREN ZUM STABILISIEREN DER FREQUENZ EINES WECHSELSTROMVERBUNDNETZWERKES SOWIE ZUGEHÖRIGE STEUEREINRICHTUNG**

(30) Priorität: 22.11.2018 DE 102018129494
(71) Anmelder: Siteco GmbH, 83301 Traunreut (DE)
(72) Erfinder: Hofinger, Christoph, 83236 Übersee (DE); Strübl, Robert, 83374 Traunwalchen (DE)
(74) Vertreter: Schmidt, Steffen

(57) **Zusammenfassung**

Die Erfindung betrifft eine Steuereinrichtung für einen elektrischen Verbraucher, insbesondere für eine Lichtquelle, wobei die Steuereinrichtung eingerichtet ist, um den elektrischen Verbraucher mit elektrischer Leistung aus einem Wechselstromverbundnetzwerk zu versorgen, und die Steuereinrichtung konfiguriert ist, um eine Abweichung der Frequenz des Wechselstroms aus dem Wechselstromverbundnetzwerk von einer Sollfrequenz über einen oberen Schwellenwert und/oder unter einem unteren Schwellenwert festzustellen und beim Feststellen einer Überschreitung des oberen Schwellenwerts die dem Verbraucher bereitgestellte Leistung zu erhöhen und/oder beim Feststellen einer Unterschreitung des unteren Schwellenwerts die dem elektrischen Verbraucher bereitgestellte elektrische Leistung zu verringern.

## Beschreibung

Die vorliegende Erfindung betrifft ein Verfahren zum Stabilisieren der Frequenz eines Wechselstromverbundnetzwerkes sowie Steuereinrichtungen, welches das Verfahren ermöglichen.

Ein Wechselstromverbundnetzwerk zur Stromversorgung einer Vielzahl von Verbrauchern erstreckt sich häufig über ein großes territoriales Gebiet. Beispielsweise reicht das europäische Verbundnetzwerk von Portugal bis zur Türkei. Es wird mit Wechselstrom gespeist, welcher eine Frequenz von 50,0 Hz aufweist. Die Netzfrequenz ist mit Ausnahme von lokalen kurzfristigen Schwankungen im gesamten Verbundnetz gleich.

Von den Kraftwerken des Verbundnetzwerksnetzes muss in jedem Augenblick genauso viel Strom erzeugt werden, wie von der Summe der Verbraucher abgenommen wird. Wenn die abgenommene Leistung über den von den Generatoren der Kraftwerke zugefügten Leistung liegt, wird das Leistungsdefizit aus der Rotationsenergie der Generatoren gedeckt. Dadurch werden die Generatoren abgebremst, was zu einer Verringerung der Netzfrequenz führt. Ebenso wird bei einer zu geringen Leistungsabnahme durch die Summe der Verbraucher eine Erhöhung der Rotationsgeschwindigkeit der Generatoren bewirkt, so dass eine Frequenzerhöhung eintritt.

Verschiedene gestaffelte Regelmechanismen sorgen bei einer Abweichung von der Sollfrequenz zu einer Leistungsanpassung der den Generatoren, um wieder die 50,0 Hz zu erreichen. Im normalen Netzbetrieb treten Abweichungen bis 0,150 Hz auf, welche durch Leistungsänderungen der Generatoren ausgeglichen werden.

Eine Primärregelleistung reagiert als erstes auf Frequenzabweichungen. Sie hat einen Totbereich von ±10 mHz, in dem kein Einsatz erfolgt. Darüber wird sie linear erhöht, bei ±200 mHz ist sie komplett aktiviert.

Eine Sekundärregelleistung hat die Aufgabe das Gleichgewicht zwischen Stromangebot und -nachfrage herzustellen. Dies wird bei einer Frequenzabweichung ab ±200 mHz aktiv. Zum Einsatz kommen dabei z.B. Pumpspeicherkraftwerke oder auch konventionelle Gas- oder Steinkohlekraftwerke, die kurzfristig zugeschaltet oder abgeschaltet werden.

Wird bei dezentralen Stromerzeugeranlagen wie Solar- oder Windkraft eine Überfrequenz von 50,2 Hz oder mehr erreicht, so schalten diese Erzeugungsanlagen automatisch ab.

Zukünftig ist davon auszugehen, dass das Verbundnetzwerk noch stärker kurzfristigen Belastungsänderungen unterliegt, beispielsweise durch die hohe Netzbelastung beim Laden von E-Autos und durch die Wetterabhängigkeit beim höheren Einsatz von Solar- und Windkraftwerken. Die Steuerung der Netzfrequenzschwankungen wird zunehmend zum Problem.

Es besteht daher ein Bedarf an einem Verfahren und an entsprechenden Geräten zur Stabilisierung der Netzfrequenzschwankungen eines Verbundnetzwerkes. Aufgabe der vorliegenden Erfindung ist es, ein einfaches Verfahren zur Regelung des Verbundnetzwerkes sowie zugehörige Geräte bereitzustellen.

Gelöst wird die Aufgabe durch eine Steuereinrichtung nach Anspruch 1 sowie ein Verfahren nach Anspruch 12.

Eine Besonderheit der vorliegenden Erfindung liegt in der Steuereinrichtung, welche dafür eingerichtet ist, am elektrischen Verbraucher die Frequenz des Wechselstroms zu messen und bei Über- oder Unterschreiten von Schwellenwerten die vom Verbraucher abgerufene elektrische Leistung zu erhöhen bzw. zu verringern. Die Aufrechterhaltung der Sollfrequenz im Verbundnetzwerk erfolgt daher nicht nur durch die Regelung der Kraftwerke zur Erhöhung oder Verringerung der in das Netzwerk eingespeisten Leistung sondern außerdem wird zur Netzstabilität auch dezentral an einzelnen Verbrauchern die Leistungsabnahme reguliert. Dieses Konzept ermöglicht in sehr einfacher Weise eine verbesserte Stabilisierung der Frequenz im Verbundnetzwerk. Insbesondere bei der Sekundärregelung, d.h. bei einem Über- oder Unterschreiten der Netzfrequenz von 200 mHz, ist es im Stand der Technik notwendig, schnell regelbare Kraftwerke, z.B. Speicherkraftwerke, hoch- oder herunterzufahren. Die Anzahl solcher kurzfristig regelbarer Kraftwerke ist jedoch im Verbundnetzwerk begrenzt. Durch die erfindungsgemäße zusätzliche Regelung an den Verbraucherstellen kann dieses Problem daher wirksam gelöst werden.

Gemäß einer bevorzugten Ausführungsform umfasst das Erhöhen und/oder Verringern der elektrischen Leistung ein Dimmen einer Lichtquelle des elektrischen Verbrauchers. Als Lichtquellen kommen insbesondere Lichtquellen im öffentlichen Raum, z.B. Straßenleuchten in Betracht. Für derartige elektrische Verbraucher ist die abgerufene elektrische Leistung nicht sonderlich kritisch, weil bei diesen Verbrauchern kurzzeitige Helligkeitsschwankungen, d.h. auf einer Skala von einigen Minuten, ohne weiteres akzeptiert werden können, ohne dass es für den Verkehrsteilnehmer störend ist. Denkbar sind aber auch Beleuchtungen in öffentlichen oder privaten Gebäuden, die mit der erfindungsgemäßen Steuereinrichtung betrieben werden. Die Helligkeitsschwankungen, sofern sie nicht abrupt erfolgen, fallen dem Benutzer kaum auf. Leuchten sind daher geeignete Verbraucher für die erfindungsgemäßen Steuerrichtungen bzw. zur Durchführung des erfindungsgemäßen Verfahrens.

Gemäß einer bevorzugten Ausführungsform kann das Erhöhen und/oder Verringern der elektrischen Leistung auch ein Zu- oder Abschalten von Zusatzeinrichtungen des Verbrauchers, insbesondere Netzwerkkomponenten oder Sensoren, umfassen. Derartige Zusatzeinrichtungen des elektrischen Verbrauchers sind nicht permanent notwendig, um den Betrieb des Verbrauchers zu gewährleisten. Kurzfristig kann auch auf die eine oder andere Zusatzeinrichtung verzichtet werden, ohne dass es den Betrieb des elektrischen Verbrauchers erkennbar stört. Die Zusatzeinrichtungen können daher ohne weiteres abgeschaltet werden, um die Leistungsabnahme kurzfristig zu verringern.

Gemäß einer bevorzugten Ausführungsform umfasst der obere und/oder untere Schwellenwert eine Abweichung von wenigstens ± 2‰, vorzugsweise ± 4‰ der Sollfrequenz. Bei einer Sollfrequenz des Verbundnetzwerkes von beispielsweise 50 Hz wie im europäischen Verbundnetzwerk tritt daher die Regelung ab einer Frequenzabweichung von 100 mHz oder 200 mHz ein. Letzteres entspricht dem Schwellenwert für die Sekundärregelung im Stand der Technik. Die genannten Schwellenwerte dienen daher zur Unterstützung der Sekundärregelung des Verbundnetzwerks, welche normalerweise mit dem Hoch- oder Herunterfahren von regelbaren Kraftwerken erfolgt.

Vorzugsweise liegen die Werte der oberen und unteren Schwelle symmetrisch um die Sollfrequenz. Da ein Leistungsüberschuss oder eine Leistungsunterversorgung im Netzwerk ähnliche Konsequenzen nach sich zieht, ist es sinnvoll, die Schwellenwerte symmetrisch um die Sollfrequenz zu legen.

Gemäß einer bevorzugten Ausführungsform umfasst die Erhöhung und/oder Verringerung der elektrischen Leistung eine kontinuierlich Leistungsänderung über einen Zeitraum zwischen 1 und 15 Sekunden, insbesondere zwischen 2 und 10 Sekunden. Gemäß dieser Ausführungsform wird die Leistungsänderung des elektrischen Verbrauchers nicht abrupt bewirkt, sondern über den genannten Zeitraum ausgedehnt. Dies hat den Vorteil, dass die Leistungsänderung, beispielsweise in Form einer Dimmung einer Lichtquelle, von dem Benutzer des Verbrauchers nicht wahrgenommen wird. Ein abruptes Umschalten der Leistung würde der Benutzer durch eine Helligkeitsänderung wahrnehmen. Das allmähliche Herauf- oder Herunterfahren der Helligkeit fällt dem Gegenüber überhaupt nicht auf.

Gemäß einer bevorzugten Ausführungsform wird die Erhöhung und/oder Verringerung der Leistung über wenigstens 5 Sekunden, insbesondere über 10 Sekunden, beibehalten. Dadurch kann vermieden werden, dass ständige Leistungsänderungen bei dem Verbraucher auftreten. Im Falle einer Lichtquelle würde dies als Flackern der Lichtquelle vom Verbraucher wahrgenommen werden. Durch eine Zeitkonstante von 5 oder 10 Sekunden kann dieser Effekt verhindert werden.

Gemäß einer bevorzugten Ausführungsform umfasst der elektrische Verbraucher eine Nennleistung und die Erhöhung und/oder Verringerung der dem elektrischen Verbraucher zur Verfügung gestellten elektrischen Leistung umfasst einen Betrag zwischen 20% und 55% der Nennleistung. Diese Werte sind ausreichend, um wirksam auf eine Stabilisierung der Netzfrequenz einzuwirken, wenn eine Vielzahl von Verbrauchern mit der entsprechenden Steuereinrichtung versehen ist. Andererseits sind die Werte gering genug, so dass eine Leistungsänderung dem Benutzer des entsprechenden Verbrauchers kaum auffällt.

Gemäß einer bevorzugten Ausführungsform ist die Steuereinrichtung eingerichtet, um dezentral einen einzelnen Verbraucher oder eine Gruppe von Verbrauchern bis maximal 100 kW zu versorgen. Dadurch ist es möglich, die Steuereinrichtung auf eine Vielzahl von einzelnen Verbrauchern über das Verbundnetzwerk zu verteilen, wodurch Netzfrequenzschwankungen, die durch lokale Ereignisse entstehen, verhindert werden können. Wären die Steuereinrichtungen nur zentral an einem Ort wirksam, könnte dies lokal in Teilen des Netzes zu einem Zusammenbruch der Netzversorgung führen. Durch das gleichmäßige Verteilen der Steuereinrichtungen auf eine Vielzahl von Verbrauchern über das gesamte Netz hinweg, kann das Netz auch gleichmäßig stabilisiert werden.

Gemäß einer bevorzugten Ausführungsform ist die Steuereinrichtung zum Bestimmen der Abweichung der Frequenz des Wechselstroms eingerichtet, um ein Rechtecksignal aus dem Wechselstrom zu erzeugen und die Frequenz aus dem Rechtecksignal mittels einer integrierten Schaltung, insbesondere einem Microcontroller, zu bestimmen. Ein Rechtecksignal lässt sich verhältnismäßig einfach aus der sinusförmigen Wechselspannung eines Verbundnetzwerkes erzeugen. Die Messung der Frequenz an dem Rechtecksignal kann dann durch eine digitale Logik in der integrierten Schaltung vorgenommen werden. Eine solche Schaltung lässt sich verhältnismäßig einfach in einem Microcontroller implementieren, so dass diese Ausführungsform besonders einfach zu realisieren ist.

Gemäß einer bevorzugten Ausführungsform weist die Steuereinrichtung einen Optokoppler auf, um den Wechselstrom des Verbundnetzwerkes galvanisch von einer nachfolgenden integrierten Schaltung zur Bestimmung der Frequenz zu entkoppeln. Diese Ausführungsform hat den Vorteil, dass keine unvorhergesehenen Spannungsspitzen im Verbundnetzwerk die integrierte Schaltung in der Steuereinrichtung zerstören können, da diese vollständig von dem Potenzial des Verbundnetzwerkes in dieser Ausführungsform entkoppelt ist.

Das Verfahren zum Stabilisieren der Frequenz eines Verbundnetzwerkes gemäß der vorliegenden Erfindung sieht es vor, dass eine Vielzahl der vorhergehend genannten Steuereinrichtungen in dem Verbundnetzwerk an einzelnen Verbrauchern angeordnet sind und entsprechend die Frequenz des Verbundnetzwerkes messen und bei Über- bzw. Unterschreiten von Schwellenwerten die vom Verbraucher abgenommene Leistung verändern. Wie vorhergehend ausgeführt, ist dabei von besonderem Vorteil, dass die Regelung dezentral an einer Vielzahl von Verbraucherstellen über das Netzwerk hinweg erfolgen kann.

Weitere Merkmale und Vorteile der vorliegenden Erfindung werden aus der nachfolgenden Beschreibung bevorzugter Ausführungsformen deutlich, die in Verbindung mit den beigefügten Figuren gegeben wird. In den Figuren ist Folgendes dargestellt.
- Figur 1: zeigt eine Schaltung in einer Steuereinrichtung gemäß einer ersten Ausführungsform der Erfindung zur Bestimmung der Netzfrequenz.
- Figur 2: zeigt eine Schaltung in einer Steuereinrichtung gemäß einer zweiten Ausführungsform der Erfindung zur Bestimmung einer Netzfrequenz.

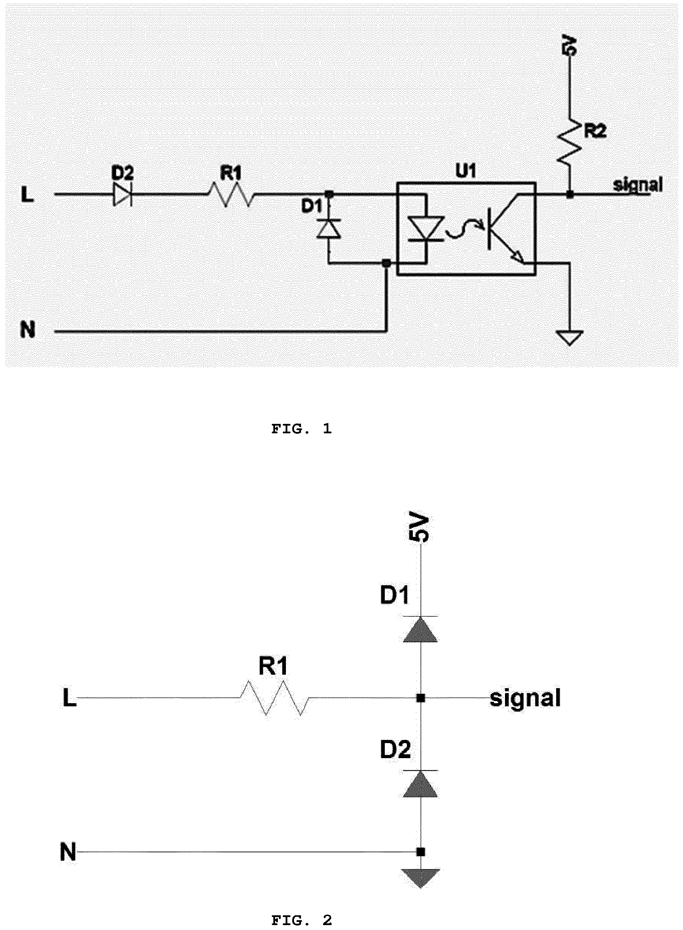

In der Schaltung gemäß Figur 1 wird eine Netzwerkspannung von z.B. 230 V an L und N angeschlossen. Eine Diode D2 ist mit L verbunden, um die untere Halbwelle der Wechselspannung abzuschneiden. Ferner ist ein Vorwiderstand R1 vor einen Optokoppler U1 geschaltet. Parallel zu dem Optokoppler U1 ist zwischen L und N eine Diode D1 geschaltet, welche dazu dient, den Optokoppler vor zu großen Spannungen zu schützen. Abhängig davon, ob eine Spannung am Optokoppler anliegt, ist der Optokoppler an der Sekundärseite leitfähig oder er sperrt. Die Ausgänge des Optokopplers an der Sekundärseite sind mit Erde und über einen Vorwiderstand R2 mit einem vorgegebenen Potenzial von z.B. 5 V verbunden. Das an dem Ausgang des Optokopplers anliegende Signal liegt dadurch bei leitfähigem Optokoppler auf Erde und bei nicht leitfähigem Optokoppler auf 5 V. Das Signal beschreibt somit eine Rechteckspannung, deren Frequenz der sinusförmigen Netzspannung entspricht. Das Signal kann in der Steuereinrichtung gemäß der vorliegenden Erfindung beispielsweise in einem Microcontroller ausgewertet werden und mit einer Sollfrequenz des Verbundnetzwerkes verglichen werden (in den Figuren nicht dargestellt). Beispielsweise kann in einer Steuereinrichtung gemäß der vorliegenden Erfindung ein Quarzoszillator enthalten sein, welcher als Referenzwert für die Sollfrequenz dient. Beim Überschreiten oder Unterschreiten einer Frequenzdifferenz von z.B. ±100 mHz oder ±200 mHz wird eine elektrische Leistung, die von der Steuereinrichtung einem elektrischen Verbraucher bereitgestellt wird, verringert bzw. erhöht. Die Erhöhung oder Verringerung erstreckt sich linear über ein vorgegebenes Zeitintervall zwischen z.B. 2 und 10 Sekunden und wird dann über eine Zeit von wenigstens 5 bis 10 Sekunden beibehalten bevor die nächste Änderung erfolgen kann.

Die Figur 2 zeigt eine alternative Schaltung zum Erzeugen eines Rechtecksignals zur Bestimmung der an L und N anliegenden Netzspannungsfrequenz. Ein Vorwiderstand R1 ist in Reihe mit L geschaltet. N liegt an einem Null-Potenzial an. Zwei Dioden D1 und D2 liegen in Reihe zwischen dem Null-Potenzial, der Netzspannung L hinter dem Vorwiderstand R1 und einem definierten positiven Potenzial von z.B. 5 V. Das Ausgangssignal wird zwischen den Dioden D1 und D2 abgenommen. Bei einer positiven Halbwelle der Netzspannung liegt an dem Ausgangssignal der definierte hohe Pegel an, weil in diesem Fall D1 in Flussrichtung geschaltet ist. Bei einer negativen Halbwelle der Netzspannung liegt an dem Ausgangssignal der Null-Pegel an, weil in diesem Fall D2 in Flussrichtung geschaltet ist. Das Ausgangssignal trägt daher im Wesentlichen eine Rechteckspannung, welche die Frequenzinformationen der Netzfrequenzwechselspannung enthält. Wie zur der ersten Ausführungsform ausgeführt, kann dieses Rechtecksignal in einer Steuereinrichtung der vorliegenden Erfindung verwendet werden, um die Abweichung zur Sollfrequenz zu ermitteln und entsprechend die Leistungsabgabe an einen Verbraucher beim Über- und/oder Unterschreiten von Schwellenwerten der Frequenzdifferenz zu erhöhen bzw. zu verringern.

Die Steuergeräte der vorliegenden Erfindung finden vorzugsweise bei Leuchten Anwendung, weil diese ein Erhöhen bzw. Verringern der Helligkeit ermöglichen, ohne dass dem Benutzer der Leuchte die Veränderung auffällt. Voraussetzung ist dafür, dass die Helligkeit der Leuchte durch die Steuereinheit nur verhältnismäßig langsam gedimmt wird, z.B. auf einer Zeitskala von 1 bis 10 Sekunden. Die Steuereinrichtung der vorliegenden Erfindung kann beispielsweise in das Vorschaltgerät einer Lichtquelle (insbesondere LED) integriert sein. Die vorliegende Erfindung bezieht sich demgemäß auch auf ein Vorschaltgerät für eine Lichtquelle mit einer integrierten Steuereinrichtung wir vorhergehend beschrieben.

## Patentansprüche

1. Steuereinrichtung für einen elektrischen Verbraucher, insbesondere für eine Lichtquelle, wobei die Steuereinrichtung eingerichtet ist, um den elektrischen Verbraucher mit elektrischer Leistung aus einem Wechselstromverbundnetzwerk zu versorgen, und
die Steuereinrichtung konfiguriert ist, um eine Abweichung der Frequenz des Wechselstroms aus dem Wechselstromverbundnetzwerk von einer Sollfrequenz über einen oberen Schwellenwert und/oder unter einem unteren Schwellenwert festzustellen und beim Feststellen einer Überschreitung des oberen Schwellenwerts die dem Verbraucher bereitgestellte Leistung zu erhöhen und/oder beim Feststellen einer Unterschreitung des unteren Schwellenwerts die dem elektrischen Verbraucher bereitgestellte elektrische Leistung zu verringern.

2. Steuereinrichtung nach Anspruch 1, wobei das Erhöhen und/oder Verringern der elektrischen Leistung ein Dimmen einer Lichtquelle des elektrischen Verbrauchers umfasst.

3. Steuereinrichtung nach einem der vorhergehenden Ansprüche, wobei das Erhöhen und/oder Verringern der elektrischen Leistung ein Zu- oder Abschalten von Zusatzeinrichtungen des Verbrauchers, insbesondere Netzwerkkomponenten oder Sensoren, umfasst.

4. Steuereinrichtung nach einem der vorhergehenden Ansprüche, wobei der obere und untere Schwellenwert eine Abweichung von wenigstens ± 2‰, vorzugsweise ± 4‰, der Sollfrequenz umfassen.

5. Steuereinrichtung nach einem der vorhergehenden Ansprüche, wobei der obere und untere Schwellenwert symmetrisch um die Sollfrequenz liegen.

6. Steuereinrichtung nach einem der vorhergehenden Ansprüche, wobei die Erhöhung und/oder Verringerung der elektrischen Leistung eine kontinuierliche Leistungsänderung über einen Zeitraum zwischen 1 und 15 Sekunden, insbesondere zwischen 2 und 10 Sekunden, umfasst.

7. Steuereinrichtung nach einem der vorhergehenden Ansprüche, wobei die Steuereinrichtung konfiguriert ist, um die Erhöhung und/oder Verringerung der Leistung über wenigstens 5 Sekunden, insbesondere wenigstens 10 Sekunden, beizubehalten.

8. Steuereinrichtung nach einem der vorhergehenden Ansprüche, wobei der elektrische Verbraucher eine Nennleistung aufweist und die Erhöhung und/oder Verringerung dem Betrag nach einen Wert zwischen 20% und 55% der Nennleistung umfasst.

9. Steuereinrichtung nach einem der vorhergehenden Ansprüche, wobei die Steuereinrichtung eingerichtet ist, um dezentral einen einzelnen Verbraucher oder eine Gruppe von Verbrauchern von maximal 100 kW zu versorgen.

10. Steuereinrichtung nach einem der vorhergehenden Ansprüche, wobei die Steuereinrichtung zum Bestimmen der Abweichung der Frequenz des Wechselstroms eingerichtet ist, um ein Rechtecksignal aus dem Wechselstrom zu erzeugen und die Frequenz aus dem Rechtecksignal mittels einer integrierten Schaltung, insbesondere einem Microcontroller, zu erzeugen.

11. Steuereinrichtung nach einem der vorhergehenden Ansprüche, wobei die Steuereinrichtung einen Optokoppler aufweist, um den Wechselstrom des Verbundnetzwerkes zur Bestimmung der Frequenz galvanisch von einer nachfolgenden integrierten Schaltung zur Bestimmung der Frequenz zu entkoppeln.

12. Verfahren zum Stabilisieren der Frequenz eines Wechselstromverbundnetzwerkes, welches folgende Schritte umfasst:
dezentrales Messen der Frequenz des Verbundnetzwerkes an einer Vielzahl von Verbraucherstellen des Verbundnetzwerkes;
Erhöhen und/oder Verringern der Leistung eines Verbrauchers, an welchem eine Überschreitung der Frequenz über einen oberen Schwellenwert und/oder eine Unterschreitung der Frequenz unter einen unteren Schwellenwert gemessen worden ist.
